(19) Europäisches Patentamt
European Patent Office
Office européen des brevets

(11) **EP 4 269 850 B1**

(12) **FASCICULE DE BREVET EUROPEEN**

(45) Date de publication et mention de la délivrance du brevet:
**23.10.2024 Bulletin 2024/43**

(21) Numéro de dépôt: **23170586.4**

(22) Date de dépôt: **28.04.2023**

(51) Classification Internationale des Brevets (IPC):
*F16K 29/00* (2006.01)   *F16K 37/00* (2006.01)
*F16K 5/06* (2006.01)   *F16K 31/04* (2006.01)
*G01F 15/02* (2006.01)   *G01H 11/08* (2006.01)
*G01F 1/667* (2022.01)   *G01P 5/24* (2006.01)
*G01F 15/00* (2006.01)   *G01F 1/66* (2022.01)

(52) Classification Coopérative des Brevets (CPC):
**F16K 29/00; F16K 5/06; F16K 31/041;**
**F16K 37/0041; F16K 37/005; G01F 1/662;**
**G01F 1/667**

(54) **SURVEILLANCE D'UNE ÉLECTROVANNE**

ÜBERWACHUNG EINES MAGNETVENTILS

MONITORING OF A SOLENOID VALVE

(84) Etats contractants désignés:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priorité: **29.04.2022 FR 2204105**

(43) Date de publication de la demande:
**01.11.2023 Bulletin 2023/44**

(73) Titulaire: **Sagemcom Energy & Telecom SAS**
**92270 Bois-Colombes (FR)**

(72) Inventeurs:
• **SABRAOUI, Abbas**
**92500 RUEIL MALMAISON (FR)**
• **BASTURK, Ahmet Samed**
**92500 RUEIL MALMAISON (FR)**
• **ABID, Oussama**
**92500 RUEIL MALMAISON (FR)**

(74) Mandataire: **Cabinet Boettcher et al**
**5, rue de Vienne**
**75008 Paris (FR)**

(56) Documents cités:
DE-A1- 102011 101 074    US-A1- 2018 306 617
US-A1- 2021 394 002    US-B1- 10 632 489

## Description

L'invention concerne le domaine des électrovannes utilisées pour contrôler le débit de tout type de fluide s'écoulant dans un conduit. Une telle électrovanne est possiblement - mais pas nécessairement - intégrée dans un compteur de fluide.

ARRIERE PLAN DE L'INVENTION

Un compteur de fluide à ultrasons comporte très classiquement un conduit dans lequel circule le fluide, et un dispositif de mesure ultrasonique comprenant un transducteur amont (côté réseau) et un transducteur aval (côté installation de l'abonné). Chaque transducteur joue successivement le rôle d'un émetteur et d'un récepteur de signaux ultrasonores. Le transducteur amont émet ainsi un signal ultrasonore dans le conduit, qui est reçu par le transducteur aval après avoir parcouru dans le fluide un chemin prédéfini (de longueur parfaitement maîtrisée). Puis, le transducteur aval émet à son tour un signal ultrasonore, qui est reçu par le transducteur amont après avoir parcouru dans le fluide le chemin prédéfini (dans l'autre sens). Le dispositif de mesure ultrasonique évalue alors le débit du fluide à partir des temps de vol des signaux ultrasonores entre les transducteurs. L'estimation du débit du fluide permet d'évaluer et de facturer la quantité de fluide consommée.

Dans certains pays, les compteurs doivent être capables de limiter, réguler, et de couper le débit du fluide. Par exemple, dans certains pays et dans le cas d'une facture d'eau impayée, le distributeur d'eau doit assurer au client final « mauvais payeur » un débit minimal durant un certain nombre de jours avant de lui couper totalement l'accès à l'eau.

Ce débit minimal peut varier en fonction du pays et du client, et il est donc nécessaire d'avoir la possibilité de réguler le débit « à la demande » : le débit doit être adapté en fonction d'une consigne de débit.

On a envisagé, pour réaliser la régulation du débit, d'intégrer dans le conduit du compteur une électrovanne, par exemple une électrovanne à bille. La position angulaire de la bille peut être commandée à distance pour réguler le débit.

Cependant, il existe un risque non négligeable de blocage de la bille de l'électrovanne, et notamment :

- en présence d'impuretés dans le fluide, par exemple du calcaire ou du sable dans l'eau, ou bien de la poussière dans l'air ou dans le gaz ;
- lorsque la bille reste pendant une longue période dans une position statique, ce qui entraîne l'accumulation d'impuretés dans la zone de contact entre la bille et le siège.

Ce phénomène dépend aussi des matériaux utilisés pour fabriquer la bille et le siège. Le siège est classiquement fabriqué en Téflon, et le frottement de la bille sur le Téflon dépend du matériau utilisé pour fabriquer la bille (inox, laiton, etc.).

Pour résoudre ce problème de blocage de la bille, il a été envisagé d'intégrer dans le conduit un transducteur piézoélectrique de puissance à proximité immédiate de l'électrovanne. Le transducteur produit une onde à basse fréquence dont résulte une dépression qui génère une cavitation. L'implosion des bulles de cavitation permet d'éliminer l'encrassement.

Cette solution est cependant complexe à mettre en oeuvre et coûteuse, car elle nécessite d'intégrer dans le compteur non seulement ledit transducteur piézoélectrique pour générer la cavitation, mais aussi une source d'énergie importante pour exciter ledit transducteur. Par ailleurs, cette solution est problématique car la présence des bulles de cavitation autour de la bille tend à perturber la mesure du débit via les ultrasons, dans le cas où la bille et le générateur de cavitation se trouvent entre les deux transducteurs dédiés aux mesures de débit.

Le document DE 10 2011 101074 A1 dévoile un procédé de surveillance d'une électrovanne de l'art antérieur.

OBJET DE L'INVENTION

L'invention a pour objet de détecter, de manière efficace, simple, peu coûteuse, et sans perturber la mesure du débit, un blocage ou un futur blocage de l'organe mobile d'une électrovanne, et d'agir contre ce blocage ou futur blocage.

RESUME DE L'INVENTION

En vue de la réalisation de ce but, on propose un procédé de surveillance d'une électrovanne qui comporte :

- un organe mobile, qui s'étend dans un conduit et dont une position courante peut être commandée pour contrôler un débit courant d'un fluide pouvant s'écouler dans le conduit ;
- un moteur électrique agencé pour entraîner en mouvement l'organe mobile de manière à lui conférer sa position courante ;

le procédé de surveillance comportant des phases de surveillance répétées régulièrement et comprenant chacune les étapes de :

- piloter le moteur électrique pour modifier la position courante de l'organe mobile ;
- évaluer une grandeur de surveillance représentative d'un courant d'appel du moteur électrique au cours de l'étape de pilotage ;
- comparer la grandeur de surveillance avec au moins un premier seuil prédéterminé et, si la grandeur de surveillance est supérieure audit premier seuil prédéterminé, mettre en œuvre au moins une action corrective pour éviter un blocage de l,électrovanne, la au moins une action corrective comprenant une action corrective consistant à augmenter une tension d'alimentation du moteur électrique de l'électrovanne.

La mise en mouvement de l'organe mobile de l'électrovanne par le moteur électrique nécessite un certain courant d'appel. Ce courant d'appel varie en fonction du niveau d'encrassement présent à l'interface entre l'organe mobile et la partie immobile de l'électrovanne. Le procédé de surveillance évalue donc l'encrassement à partir de la grandeur de surveillance, et déclenche de manière anticipée une action corrective avant que le niveau d'encrassement devienne problématique et risque de bloquer l'électrovanne. Le procédé de surveillance est très efficace et sa mise en œuvre est à la fois simple et peu coûteuse, puisqu'elle ne nécessite pas de composant dédié.

Dans le cas où l'électrovanne est intégrée dans un compteur, on peut assurer que la mesure du débit n'est pas perturbée par la mise en oeuvre du procédé de surveillance en mettant en oeuvre les phases de surveillance uniquement à débit nul.

On propose de plus un procédé de surveillance tel que précédemment décrit, dans lequel la au moins une action corrective comprend une première action corrective consistant à augmenter une fréquence de mise en oeuvre des phases de surveillance.

On propose de plus un procédé de surveillance tel que précédemment décrit, dans lequel la au moins une action corrective comprend une deuxième action corrective consistant à augmenter une tension d'alimentation du moteur électrique de l'électrovanne.

On propose de plus un procédé de surveillance tel que précédemment décrit, dans lequel chaque phase de surveillance comprend l'étape, si la grandeur de surveillance est supérieure audit premier seuil prédéterminé, de comparer avec un seuil de fréquence prédéterminé la fréquence de mise en oeuvre des phases de surveillance, et l'étape de :

- si ladite fréquence de mise en oeuvre est inférieure au seuil de fréquence prédéterminé, mettre en oeuvre la première action corrective, ou
- si ladite fréquence de mise en oeuvre est supérieure au seuil de fréquence prédéterminé, mettre en oeuvre la deuxième action corrective.

On propose de plus un procédé de surveillance tel que précédemment décrit, dans lequel chaque phase de surveillance comprend en outre les étapes, si la grandeur de surveillance est inférieure audit premier seuil prédéterminé, de comparer la grandeur de surveillance avec un deuxième seuil prédéterminé inférieur au premier seuil prédéterminé et, si la grandeur de surveillance est inférieure audit deuxième seuil prédéterminé, de réduire une fréquence de mise en oeuvre des phases de surveillance.

On propose de plus un procédé de surveillance tel que précédemment décrit, comprenant en outre l'étape d'acquérir des mesures d'un débit courant du fluide dans le conduit, les phases de surveillance étant mises en oeuvre uniquement lorsque le débit courant est nul.

On propose de plus un procédé de surveillance tel que précédemment décrit, dans lequel la grandeur de surveillance est égale à un rapport entre le courant d'appel et un courant nominal du moteur électrique au cours de l'étape de pilotage.

On propose de plus un système de contrôle de débit comprenant une électrovanne, un capteur de courant agencé pour mesurer un courant électrique fourni au moteur électrique, et un circuit de traitement dans lequel est mis en oeuvre le procédé de surveillance tel que précédemment décrit.

On propose de plus un système de contrôle de débit tel que précédemment décrit, comprenant en outre un composant d'alimentation agencé pour alimenter le circuit de traitement et le moteur électrique de l'électrovanne, le capteur de courant étant un shunt monté en parallèle de deux sorties du composant d'alimentation.

On propose de plus un système de contrôle de débit tel que précédemment décrit, dans lequel l'électrovanne est une vanne à bille.

On propose de plus un compteur de fluide comprenant un dispositif de mesure de débit et un système de contrôle de débit tel que précédemment décrit.

On propose de plus un compteur de fluide tel que précédemment décrit, le dispositif de mesure de débit étant un dispositif de mesure ultrasonique comprenant deux transducteurs agencés pour émettre et recevoir des signaux ultrasonores dans le conduit, le dispositif de mesure ultrasonique étant agencé pour évaluer un débit courant du fluide à partir de temps de vol des signaux ultrasonores entre les transducteurs.

On propose de plus un compteur de fluide tel que précédemment décrit, l'électrovanne étant positionnée, selon une longueur du conduit, entre les deux transducteurs.

On propose de plus un programme d'ordinateur comprenant des instructions qui conduisent le circuit de traitement du système tel que précédemment décrit à exécuter les étapes du procédé de surveillance tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit d'un mode de mise en oeuvre particulier non limitatif de l'invention.

BREVE DESCRIPTION DES DESSINS

Il sera fait référence aux dessins annexés parmi lesquels :

[Fig. 1] la figure 1 représente un compteur comprenant un conduit, une électrovanne, un dispositif de mesure ultrasonique et un circuit de traitement ;

[Fig. 2] la figure 2 représente schématiquement le compteur de la figure 1 ainsi que différents composants du circuit de traitement ;

[Fig. 3] la figure 3 représente un graphique comprenant une courbe du courant électrique fourni au moteur de l'électrovanne ;

[Fig. 4] la figure 4 représente un graphique comprenant une courbe du courant électrique avant encrassement, et une courbe du courant électrique après encrassement ;

[Fig. 5] la figure 5 représente un graphique comprenant une courbe du courant électrique lorsque le moteur est alimenté en 3,6V, et une courbe du courant électrique lorsque le moteur est alimenté en 5V ;

[Fig. 6] la figure 6 représente des étapes du procédé de surveillance selon l'invention.

## DESCRIPTION DETAILLEE DE L'INVENTION

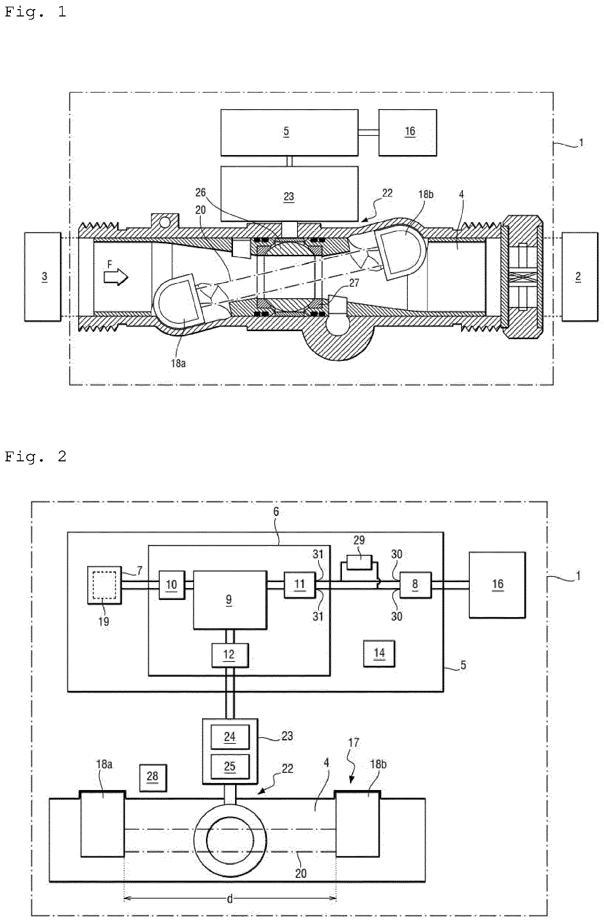

En référence aux figures 1 et 2, l'invention est ici mise en oeuvre dans un compteur de fluide à ultrasons 1. Le compteur 1 est en l'occurrence un compteur d'eau, qui est utilisé pour mesurer la consommation d'eau de l'installation d'un abonné 2. L'eau est fournie à l'installation de l'abonné 2 par un réseau de distribution d'eau 3.

Le compteur 1 comporte un conduit 4 dans lequel circule l'eau fournie par le réseau 3 à l'installation 2. L'eau circule dans le conduit 4 d'amont en aval, comme cela est indiqué par le sens de la flèche F. Ici, par « en amont », on entend du côté du réseau 3, et par « en aval », on entend du côté de l'installation 2.

Le compteur 1 comporte de plus un circuit de traitement 5 qui comprend un microcontrôleur 6, un ASIC 7 (pour *Application Spécifie Integrated Circuit)* et un composant d'alimentation 8.

Le microcontrôleur 6 intègre un CPU 9 (pour *Central Processing Unit,* ou unité centrale de traitement), un module de communication SPI 10 (pour *Serial Peripheral Interface,* ou interface périphérique série), un convertisseur analogique-numérique 11 et un convertisseur numérique-analogique 12. Le circuit de traitement 5 comprend aussi une ou des mémoires 14. Au moins l'une de ces mémoires 14 forme un support d'enregistrement lisible par ordinateur, sur lequel est enregistré au moins un programme d'ordinateur comprenant des instructions qui conduisent le microcontrôleur 6 à exécuter au moins certaines des étapes du procédé de surveillance qui sera décrit plus bas.

Le CPU 9 est relié au module de communication SPI 10 qui est lui-même relié à l'ASIC 7. Le CPU 9 est aussi relié au convertisseur analogique-numérique 11 et au convertisseur numérique-analogique 12.

Le composant d'alimentation 8 est ici un régulateur de tension basse consommation LDO (pour *Low-DropOut,* que l'on pourrait traduire par faible chute de tension). Le composant d'alimentation 8 est relié au microcontrôleur 6 et, en particulier, au convertisseur analogique-numérique 11.

Le compteur 1 comprend aussi une pile 16 ayant deux bornes reliées au composant d'alimentation 8 du circuit de traitement 5.

Le compteur 1 comprend de plus un dispositif de mesure ultrasonique 17 qui permet de mesurer le débit d'eau fourni à l'installation 2 par le réseau 3.

Le dispositif de mesure ultrasonique 17 comporte un transducteur amont 18a et un transducteur aval 18b. Le dispositif de mesure ultrasonique 17 comporte aussi un module de traitement 19 relié au transducteur amont 18a et au transducteur aval 18b. Le module de traitement 19 est ici implémenté dans l'ASIC 7.

Le transducteur amont 18a et le transducteur aval 18b sont avantageusement (mais pas nécessairement) appairés. Le transducteur amont 18a et le transducteur aval 18b sont ici des transducteurs piézoélectriques.

Chaque transducteur 18a, 18b joue successivement le rôle d'un émetteur et d'un récepteur de signaux ultrasonores.

Le module de traitement 19 génère ou commande la génération d'un signal électrique d'excitation qui est appliqué en entrée de l'émetteur. L'émetteur génère alors un signal ultrasonore. Le récepteur reçoit le signal ultrasonore après que celui-ci a parcouru dans le fluide un chemin prédéfini 20, et le module de traitement 19 mesure le temps de vol.

Le chemin prédéfini 20 est ici un chemin direct (incliné par rapport à un axe longitudinal du conduit 4, comme c'est le cas sur la figure 1, ou parallèle audit axe, comme c'est le cas sur la figure 2). Le chemin prédéfini 10 a une longueur $d$, qui est connue très précisément.

Ainsi, le transducteur amont 18a émet tout d'abord le signal ultrasonore, qui est reçu par le transducteur aval 18b. Le module de traitement 19 mesure le temps de vol d'amont en aval $TOF_{UP}$.

Puis, le transducteur aval 18b émet le signal ultrasonore, qui est reçu par le transducteur amont 18a. Le module de traitement 19 mesure le temps de vol d'aval en amont $TOF_{DN}$.

Le module de traitement 19 calcule alors, à partir notamment des temps de vol $TOF_{UP}$ et $TOF_{DN}$, la vitesse du son dans l'eau, la vitesse de l'écoulement de l'eau, et le débit de l'eau.

Le compteur 1 comprend aussi une électrovanne 22 qui permet de réguler, limiter ou couper le débit d'eau.

L'électrovanne 22 est positionnée, selon une longueur du conduit 4, entre les deux transducteurs 18a, 18b.

L'électrovanne 22 comporte un moto-réducteur 23 comprenant lui-même un moteur électrique 24 et un réducteur 25. L'électrovanne 22 comprend aussi un organe mobile qui s'étend dans le conduit 4 et dont une position courante peut être commandée pour contrôler le débit courant de l'eau. Ici, l'électrovanne 22 est une vanne à bille et l'organe mobile est donc une bille 26 ; la position courante de la bille 26 est une position angulaire. Le motoréducteur 23 permet de contrôler l'électrovanne 22.

L'électrovanne 22 comporte aussi un siège 27 de la bille 26. Le siège 27 forme un joint étanche entre la bille 26 et le conduit 4.

Le compteur 1 comprend aussi un capteur de position 28 (représenté schématiquement sur la figure 2) qui est agencé pour mesurer la position angulaire courante de la bille 26.

Le compteur 1 comprend de plus des moyens de communication qui sont susceptibles de mettre en oeuvre tout type de communication, et par exemple une communication via un réseau cellulaire de type 2G, 3G, 4G, Cat-M ou NB-IOT, une communication selon le protocole LoRa, une communication radio selon le standard *Wize* opérant à la fréquence de 169MHz, etc.

Le procédé de surveillance selon l'invention, qui est mis en oeuvre par le microcontrôleur 6 du circuit de traitement 5, comporte des phases de surveillance qui sont répétées régulièrement.

Au cours de chaque phase de surveillance, le microcontrôleur 6 pilote tout d'abord le moteur électrique 24 pour modifier la position angulaire courante de la bille 26. Le mouvement de la bille 26 permet de limiter le dépôt d'impuretés et de décrasser l'interface entre la partie mobile et la partie immobile de l'électrovanne 22, c'est-à-dire entre la bille 26 et le siège 27. La modification de la position courante de la bille 26 est par exemple une rotation d'un quart de tour.

Puis, le microcontrôleur 6 tente de détecter l'encrassement. Pour cela, le microcontrôleur 6 évalue une grandeur de surveillance représentative du courant d'appel du moteur électrique 24 au cours de l'étape de pilotage qui vient d'être évoquée, c'est-à-dire lorsque le moteur électrique 24 modifie la position courant de la bille 26. La grandeur de surveillance est ici égale à un rapport entre le courant d'appel et le courant nominal du moteur électrique 24 au cours de l'étape de pilotage.

La mise en mouvement de la bille 26 de l'électrovanne 22 nécessite en effet de fournir au moteur électrique 24 un certain courant d'appel (aussi appelé courant de démarrage ou courant d'enclenchement) qui est généralement 10 à 20 fois supérieur au courant nominal.

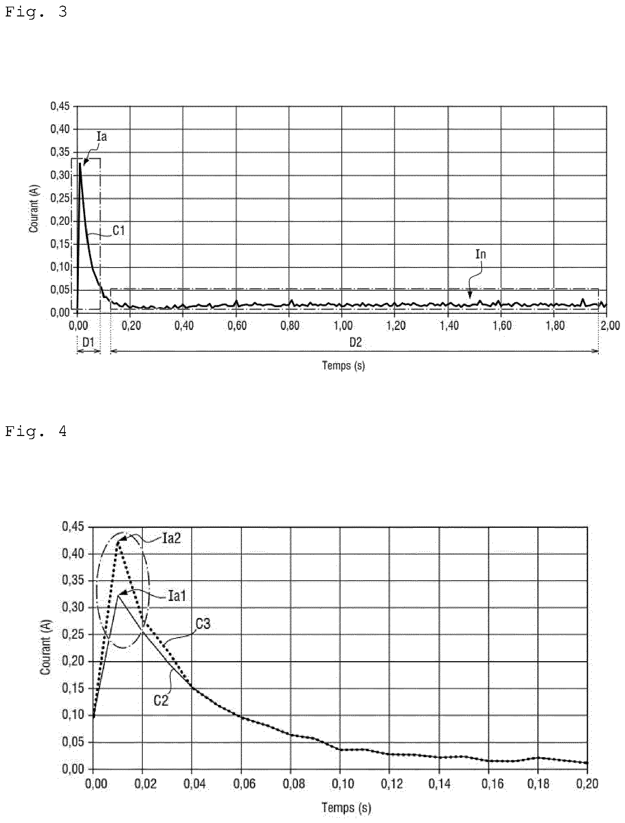

La courbe C1 de la figure 3 représente un exemple du courant fourni au moteur électrique d'une électrovanne intégrée dans un compteur d'eau résidentiel. On distingue le courant d'appel Ia et le courant nominal In.

Par « courant d'appel », on entend ici la valeur maximale du courant au niveau du pic présent dans l'intervalle temporel D1. Par « courant nominal », on entend par exemple une moyenne du courant sur l'intervalle temporel D2.

Le courant d'appel Ia est par exemple de l'ordre de 330 mA. La durée du pic est par exemple comprise entre 20 et 30 ms. Le courant nominal In est stable et est par exemple de l'ordre de 20 mA.

Or, un encrassement augmentera la force de frottement entre la bille 26 et son support mécanique (le siège 27), de sorte que la mise en mouvement de la bille 26 nécessite un courant d'appel plus élevé.

On voit sur la courbe C2 de la figure 4 le courant d'appel Ia1 d'une électrovanne qui vient d'être installée, et sur la courbe C3 le courant d'appel Ia2 après 1 mois d'utilisation de l'électrovanne dans de l'eau chargée en calcaire.

On remarque que le courant d'appel a augmenté de 330 mA à 420 mA. Une fois que l'encrassement a été éliminé, le courant converge rapidement vers sa valeur nominale (autour de 20 mA).

Par conséquent, le rapport entre le courant d'appel et le courant nominal est un bon indicateur du niveau d'encrassement. Il est donc possible de le mesurer et de suivre son évolution par rapport à une valeur de référence.

Pour évaluer la grandeur de surveillance, c'est-à-dire ici le rapport entre le courant d'appel et le courant nominal, le circuit de traitement 5 utilise les mesures produites par un capteur de courant.

Le capteur de courant est ici un shunt 29, c'est-à-dire une résistance de précision de faible valeur (de l'ordre de milliohms ou de fractions de milliohms). Le shunt 29 est ici monté en parallèle de deux sorties 30 du composant d'alimentation 8, c'est-à-dire que le shunt 29 comprend une borne reliée à l'une des sorties 30 et une autre borne reliée à l'autre des sorties 30. Les deux sorties 30 sont elles-mêmes reliées à deux entrées 31 du convertisseur analogique-numérique 11 du microcontrôleur 6. Le convertisseur analogique-numérique 11 permet de convertir le signal analogique produit par le composant d'alimentation 8 en une valeur numérique traitée par le CPU 9.

Le shunt 29 développe une tension proportionnelle au courant qui le traverse.

L'équation qui décrit cette relation est la suivante :

$$I = V/R,$$

où I désigne le courant en ampères, V représente la différence de potentiel aux bornes du shunt 29 exprimée en volts et R est la valeur de la résistance du shunt 29 exprimée en ohms.

Ici, la pile 16 alimente, via le composant d'alimentation 8, le circuit de traitement 5 et le dispositif de mesure ultrasonique 17. Le convertisseur numérique-analogique 12 permet de convertir une consigne d'entraînement de la bille 26, produite par un algorithme mis en oeuvre par le CPU 9, en un signal analogique pour contrôler l'électrovanne 22. La pile 16 alimente donc aussi l'électrovanne 22 (c'est à dire le moteur électrique 24) via le composant d'alimentation 8.

Les mesures de courant produites par le shunt 29 permettent donc, en retranchant le courant consommé par le circuit de traitement 5 et le dispositif de mesure ultrasonique 17, d'évaluer le courant fourni au moteur électrique 24 - et donc le courant d'appel et le courant nominal.

Si la grandeur de surveillance devient trop importante, le microcontrôleur 6 met en oeuvre au moins une action corrective pour éviter un (futur) blocage de l'électrovanne 22.

Une première action corrective consiste à augmenter la fréquence de mise en oeuvre des phases de surveillance (c'est-à-dire à réduire la durée entre deux phases de surveillance successives). L'augmentation de la fréquence de l'activation de l'électrovanne 22 permet en effet d'éliminer plus efficacement l'encrassement.

Une deuxième action corrective consiste à augmenter une tension d'alimentation du moteur électrique 24 de l'électrovanne 22.

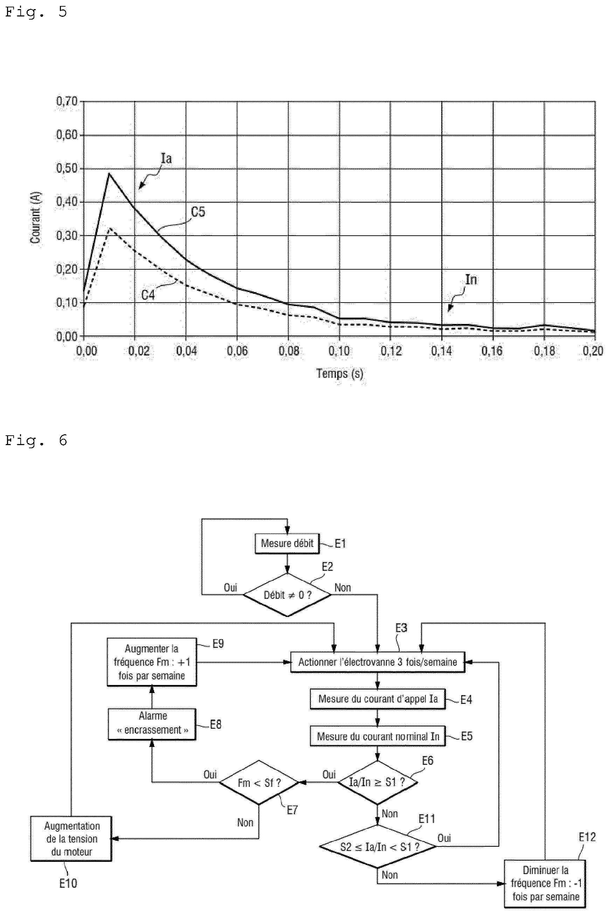

On voit sur la figure 5 l'impact de la tension d'alimentation du moteur électrique 24 sur le courant d'appel et sur le courant nominal de l'électrovanne : la courbe C4 correspond à une tension de 3,6V et la courbe C5 correspond à une tension de 5V. L'augmentation de la tension d'alimentation se traduit par une plus grande puissance qui aura pour conséquence une augmentation de la vitesse de rotation de la bille 26 et du couple du moteur électrique 24, ce qui facilitera l'élimination de la couche d'encrassement.

Une troisième action corrective consiste à produire un message d'alarme et à le transmettre au SI (pour Système d'Information) du distributeur d'eau en utilisant les moyens de communication précédemment évoqués. L'alarme pourrait aussi être transmise à l'abonné.

On décrit maintenant, en référence à la figure 6, un mode de réalisation particulier du procédé de surveillance selon l'invention.

Les phases de surveillance sont mises en oeuvre uniquement lorsque le débit courant d'eau est nul. Ceci permet d'éviter de perturber la mesure du débit et donc la facturation du client, mais aussi d'éviter de pénaliser le client si la bille 26, pour les besoins du procédé de surveillance, est entraînée dans une position qui réduit le débit courant.

Le microcontrôleur 6 acquiert les mesures de débit produites par le dispositif de mesure ultrasonique 17 (étape E1), puis compare le débit courant avec un débit nul (étape E2).

Si le débit courant est non nul, le procédé repasse à l'étape E1. Sinon, le procédé passe à l'étape E3.

Une phase de surveillance est alors mise en oeuvre. La fréquence de mise en oeuvre initiale des phases de surveillance est par exemple égale à 3 fois par semaine, c'est-à-dire que les phases de surveillance sont initialement déclenchées trois fois par semaine.

A l'étape E3, le microcontrôleur 6 pilote le moteur électrique 24 pour modifier la position courante de la bille 26.

Le microcontrôleur 6 acquiert les mesures de courant produites par le shunt 29, et évalue le courant d'appel Ia (étape E4), le courant nominal In (étape E5), et la grandeur de surveillance Ia/In.

Le microcontrôleur 6 compare alors la grandeur de surveillance Ia/In avec un premier seuil prédéterminé S1 (étape E6). Le premier seuil prédéterminé S1 est par exemple égal à 15.

Si la grandeur de surveillance est supérieure audit premier seuil prédéterminé (ici supérieure ou égale), le microcontrôleur 6 compare la fréquence Fm de mise en oeuvre des phases de surveillance avec un seuil de fréquence prédéterminé Sf (étape E7). Le seuil de fréquence prédéterminé Sf est par exemple égal à sept fois par semaine.

Si ladite fréquence Fm de mise en oeuvre est inférieure au seuil de fréquence prédéterminé (ici strictement inférieure), le microcontrôleur 6 réalise la troisième action corrective, consistant à produire et transmettre un message d'alarme (étape E8), puis la première action corrective, consistant à augmenter la fréquence de mise en œuvre des phases de surveillance (étape E9). La fréquence Fm est augmentée d'une mise en œuvre par semaine. Le procédé de surveillance passe alors à l'étape E3.

A l'étape E7, si la fréquence Fm de mise en oeuvre des phases de surveillance est supérieure au seuil de fréquence prédéterminé Sf (ici supérieure ou égale), le microcontrôleur 6 réalise la deuxième action corrective consistant à augmenter la tension d'alimentation du moteur électrique 24 (étape E10). Le procédé de surveillance passe alors à l'étape E3.

A l'étape E6, si la grandeur de surveillance Ia/In est inférieure au premier seuil prédéterminé S1 (ici strictement inférieure), le microcontrôleur 6 compare la grandeur de surveillance avec un deuxième seuil prédéterminé S2, inférieur au premier seuil prédéterminé S1 (étape E11). Le deuxième seuil prédéterminé S2 est par exemple égal à 10.

Si la grandeur de surveillance est supérieure au deuxième seuil prédéterminé (ici supérieure ou égale), le procédé de surveillance passe à l'étape E3. Par contre, si la grandeur de surveillance est inférieure au deuxième seuil prédéterminé (ici strictement inférieure), le microcontrôleur 6 réduit la fréquence Fm de mise en oeuvre des phases de surveillance. Comme l'encrassement est très faible, il est possible de réduire la fréquence des phases de surveillance (ce qui permet de réduire la consommation électrique).

La fréquence Fm est réduite d'une mise en oeuvre par semaine (étape E12). Le procédé de surveillance passe alors à l'étape E3.

Bien entendu, l'invention n'est pas limitée au mode de réalisation décrit mais englobe toute variante entrant dans le champ de l'invention telle que définie par les revendications.

L'invention s'applique bien sûr quels que soient le positionnement et la configuration du transducteur amont et du transducteur aval. Les signaux ultrasonores peuvent être émis avec une orientation d'un angle quelconque par rapport à l'axe longitudinal du conduit.

Le chemin prédéfini entre les transducteurs n'est pas nécessairement un chemin direct. Le chemin prédéfini pourrait inclure des réflecteurs, par exemple des miroirs orientés à 45°.

Le dispositif de mesure du débit n'est pas nécessairement un dispositif de mesure ultrasonique ; un dispositif de mesure électromagnétique pourrait par exemple être utilisé.

La vanne n'est pas nécessairement une vanne à bille. Tout type de vanne peut être utilisé pour réguler le débit, par exemple une vanne à tiroir, une vanne papillon, etc. La position de l'organe mobile, permettant de réguler le débit, n'est pas nécessairement une position angulaire mais peut être une position axiale.

L'architecture du circuit de traitement pourrait être différente de celle présentée ici. Le module de communication entre le microcontrôleur et l'ASIC n'est pas nécessairement un module SPI. Le circuit de traitement pourrait par exemple comprendre non pas un ASIC et un microcontrôleur, mais un seul composant de traitement (ASIC, microcontrôleur, processeur, FPGA, etc. - FPGA pour *Field Programmable Gate Array).* Le procédé de surveillance n'est pas nécessairement mis en oeuvre dans un microcontrôleur, ni même dans un seul composant de traitement. Certaines étapes du procédé de surveillance pourraient être effectuées à distance (par exemple sur un serveur du *cloud,* ou nuage).

Le capteur de courant n'est pas nécessairement un shunt, et pourrait être positionné différemment, en étant par exemple connecté directement en entrée du moteur.

L'invention ne s'applique bien sûr pas uniquement à un compteur d'eau, mais peut s'appliquer à tout compteur de tout fluide : gaz, pétrole, huile, médicament, etc.

L'invention n'est pas nécessairement mise en oeuvre dans un compteur, mais s'applique à tout système de contrôle de débit, agencé pour contrôler le débit d'un fluide s'écoulant dans un conduit, et comprenant une électrovanne, un capteur de courant agencé pour mesurer le courant électrique fourni au moteur électrique, et un circuit de traitement dans lequel est mis en oeuvre le procédé de surveillance.

La grandeur de surveillance utilisée pourrait être différente de celle décrite ici. La grandeur de surveillance pourrait par exemple être le courant d'appel lui-même.

Le procédé de surveillance décrit en figure 6 n'est bien sûr pas limitatif. Il serait par exemple possible de mettre en oeuvre les trois actions correctives (et même d'autres actions correctives) dès que la grandeur de surveillance devient supérieure à un seuil prédéterminé.

## Revendications

1. Procédé de surveillance d'une électrovanne (22) qui comporte :

   - un organe mobile (26), qui s'étend dans un conduit (4) et dont une position courante peut être commandée pour contrôler un débit courant d'un fluide pouvant s'écouler dans le conduit ;
   - un moteur électrique (24) agencé pour entraîner en mouvement l'organe mobile de manière à lui conférer sa position courante ;

   le procédé de surveillance comportant des phases de surveillance répétées régulièrement et comprenant chacune les étapes de :

   - piloter le moteur électrique pour modifier la position courante de l'organe mobile ;
   - évaluer une grandeur de surveillance représentative d'un courant d'appel (Ia) du moteur électrique au cours de l'étape de pilotage ;
   - comparer la grandeur de surveillance avec au moins un premier seuil prédéterminé (S1) et, si la grandeur de surveillance est supérieure audit premier seuil prédéterminé, mettre en oeuvre au moins une action corrective pour éviter un blocage de l'électrovanne, **caractérisé en ce que**

   la au moins une action corrective comprend une action corrective consistant à augmenter une tension d'alimentation du moteur électrique (24) de l'électrovanne (22).

2. Procédé de surveillance selon la revendication 1, dans lequel la au moins une action corrective comprend de plus une action corrective consistant à augmenter une fréquence de mise en oeuvre des phases de surveillance.

3. Procédé de surveillance selon les revendications 1 et 2, dans lequel chaque phase de surveillance comprend l'étape, si la grandeur de surveillance est supérieure audit premier seuil prédéterminé, de comparer avec un seuil de fréquence prédéterminé (Sf) la fréquence de mise en oeuvre des phases de surveillance, et l'étape de :

   - si ladite fréquence de mise en œuvre est inférieure au seuil de fréquence prédéterminé, mettre en oeuvre l'action corrective consistant à augmenter la fréquence de mise en œuvre des phases de surveillance, ou
   - si ladite fréquence de mise en œuvre est supérieure au seuil de fréquence prédéterminé, mettre en oeuvre l'action corrective consistant à augmenter la tension d'alimentation du moteur électrique (24) de l'électrovanne (22).

4.  Procédé de surveillance selon l'une des revendications précédentes, dans lequel chaque phase de surveillance comprend en outre les étapes, si la grandeur de surveillance est inférieure audit premier seuil prédéterminé, de comparer la grandeur de surveillance avec un deuxième seuil prédéterminé (S2) inférieur au premier seuil prédéterminé et, si la grandeur de surveillance est inférieure audit deuxième seuil prédéterminé, de réduire une fréquence de mise en oeuvre des phases de surveillance.

5.  Procédé de surveillance selon l'une des revendications précédentes, comprenant en outre l'étape d'acquérir des mesures d'un débit courant du fluide dans le conduit (4), les phases de surveillance étant mises en oeuvre uniquement lorsque le débit courant est nul.

6.  Procédé de surveillance selon l'une des revendications précédentes, dans lequel la grandeur de surveillance est égale à un rapport entre le courant d'appel et un courant nominal du moteur électrique (24) au cours de l'étape de pilotage.

7.  Système de contrôle de débit comprenant une électrovanne (22), un capteur de courant (29) agencé pour mesurer un courant électrique fourni à un moteur électrique (24), et un circuit de traitement (5) dans lequel est mis en oeuvre le procédé de surveillance selon l'une des revendications précédentes.

8.  Système de contrôle de débit selon la revendication 7, comprenant en outre un composant d'alimentation (8) agencé pour alimenter le circuit de traitement (5) et le moteur électrique (24) de l'électrovanne, le capteur de courant étant un shunt monté en parallèle de deux sorties du composant d'alimentation.

9.  Système de contrôle de débit selon l'une des revendications 7 ou 8, dans lequel l'électrovanne est une vanne à bille.

10. Compteur de fluide comprenant un dispositif de mesure de débit (17) et un système de contrôle de débit selon l'une des revendications 7 à 9.

11. Compteur de fluide selon la revendication 10, le dispositif de mesure de débit (17) étant un dispositif de mesure ultrasonique comprenant deux transducteurs (18a, 18b) agencés pour émettre et recevoir des signaux ultrasonores dans le conduit, le dispositif de mesure ultrasonique étant agencé pour évaluer un débit courant du fluide à partir de temps de vol des signaux ultrasonores entre les transducteurs.

12. Compteur de fluide selon l'une des revendications 10 ou 11, l'électrovanne (22) étant positionnée, selon une longueur du conduit, entre les deux transducteurs.

13. Programme d'ordinateur comprenant des instructions qui conduisent le circuit de traitement du système selon l'une des revendications 7 à 9 à exécuter les étapes du procédé de surveillance selon l'une des revendications 1 à 6.

14. Support d'enregistrement lisible par ordinateur, sur lequel est enregistré le programme d'ordinateur selon la revendication 13.

**Patentansprüche**

1.  Verfahren zur Überwachung eines Magnetventils (22), das Folgendes enthält:

    - ein bewegliches Organ (26), das sich in einer Leitung (4) erstreckt und von dem eine aktuelle Position derart angesteuert werden kann, dass diese eine aktuelle Durchflussmenge eines Fluides steuert, das in der Leitung fließen kann;
    - einen Elektromotor (24), der dazu angeordnet ist, das bewegliche Organ derart in Bewegung zu versetzen, dass dieses in seine aktuelle Position gebracht wird;

    wobei das Überwachungsverfahren regelmäßig wiederholte Phasen enthält, die jeweils die Schritte umfassen, dass:

    - der Elektromotor angesteuert wird, um die aktuelle Position des beweglichen Organs zu verändern;
    - eine Überwachungsgröße ausgewertet wird, die einen Einschaltstrom (Ia) des Elektromotors während des Ansteuerungsschrittes darstellt;
    - die Überwachungsgröße mit zumindest einem ersten vorbestimmten Schwellenwert (S1) verglichen wird und dass, wenn die Überwachungsgröße größer als der erste vorbestimmte Schwellenwert ist, zumindest eine Korrekturmaßnahme durchgeführt wird, um ein Blockieren des Magnetventils zu verhindern, **dadurch gekennzeichnet, dass** die zumindest eine Korrekturmaßnahme eine Korrekturmaßnahme umfasst, die darin besteht, eine Versorgungsspannung des Elektromotors (24) des Magnetventils (22) zu erhöhen.

2.  Überwachungsverfahren nach Anspruch 1, wobei die zumindest eine Korrekturmaßnahme ferner eine Korrekturmaßnahme umfasst, die darin besteht, eine Durchführungshäufigkeit der Überwachungsphasen zu erhöhen.

**3.** Überwachungsverfahren nach den Ansprüchen 1 und 2, wobei jede Überwachungsphase umfasst: den Schritt, in dem, wenn die Überwachungsgröße größer als der erste vorbestimmte Schwellenwert ist, die Durchführungshäufigkeit der Überwachungsphasen mit einem vorbestimmten Häufigkeitsschwellenwert (Sf) verglichen wird, und den Schritt, in dem:

- wenn die Durchführungshäufigkeit kleiner als der vorbestimmte Schwellenwert ist, die Korrekturmaßnahme durchgeführt wird, die darin besteht, die Durchführungshäufigkeit der Überwachungsphasen zu erhöhen, oder
- wenn die Durchführungshäufigkeit größer als der vorbestimmte Schwellenwert ist, die Korrekturmaßnahme durchgeführt wird, die darin besteht, die Versorgungsspannung des Elektromotors (24) des Magnetventils (22) zu erhöhen.

**4.** Überwachungsverfahren nach einem der vorhergehenden Ansprüche, wobei jede Überwachungsphase ferner umfasst: die Schritte, in denen, wenn die Überwachungsgröße kleiner als der erste vorbestimmte Schwellenwert ist, die Überwachungsgröße mit einem zweiten vorbestimmten Schwellenwert (S2), der kleiner als der erste vorbestimmte Wert ist, verglichen wird und, wenn die Überwachungsgröße kleiner als der zweite vorbestimmte Schwellenwert ist, die Durchführungshäufigkeit der Überwachungsphasen verringert wird.

**5.** Überwachungsverfahren nach einem der vorhergehenden Ansprüche, ferner umfassend den Schritt, in dem Messungen eines aktuellen Fluiddurchflusses in der Leitung (4) erfasst werden, wobei die Überwachungsphasen erst dann durchgeführt werden, wenn die aktuelle Durchflussmenge gleich null ist.

**6.** Überwachungsverfahren nach einem der vorhergehenden Ansprüche, wobei die Überwachungsgröße gleich einem Verhältnis zwischen dem Einschaltstrom und einem Nennstrom des Elektromotors (24) während des Ansteuerungsschritts ist.

**7.** Durchfluss-Kontrollsystem, umfassend ein Magnetventil (22), einen Stromsensor (29), der dazu angeordnet ist, einen dem Elektromotor (24) zugeführten elektrischen Strom zu messen, und eine Verarbeitungsschaltung (5), in der das Überwachungsverfahren nach einem der vorhergehenden Ansprüche ausgeführt wird.

**8.** Durchfluss-Kontrollsystem nach Anspruch 7, ferner umfassend eine Versorgungskomponente (8), die dazu angeordnet ist, die Verarbeitungsschaltung (5) und den Elektromotor (24) mit Strom zu versorgen, wobei es sich bei dem Stromsensor um einen parallel zu zwei Eingängen der Versorgungskomponente geschalteten Shunt handelt.

**9.** Durchfluss-Kontrollsystem nach einem der Ansprüche 7 oder 8, wobei es sich bei dem Magnetventil um ein Kugelventil handelt.

**10.** Fluidzähler umfassend eine Durchfluss-Messvorrichtung (17) und ein Durchfluss-Kontrollsystem nach einem der Ansprüche 7 bis 9.

**11.** Fluidzähler nach Anspruch 10, wobei es sich bei der Durchfluss-Messvorrichtung (17) um eine Ultraschall-Messvorrichtung mit zwei Wandlern (18a, 18b) handelt, die dazu angeordnet sind, Ultraschallsignale in der Leitung auszusenden und zu empfangen, wobei die Ultraschall-Messvorrichtung dazu angeordnet ist, aus Flugzeiten der Ultraschallsignale zwischen den Wandlern einen aktuellen Fluiddurchfluss auszuwerten.

**12.** Fluidzähler nach einem der Ansprüche 10 oder 11, wobei das Magnetventil (22) gemäß einer Länge der Leitung zwischen den beiden Wandlern positioniert ist.

**13.** Computerprogramm, das Befehle umfasst, welche die Verarbeitungsschaltung des Systems nach einem der Ansprüche 7 bis 9 dazu veranlassen, die Schritte des Überwachungsverfahrens nach einem der Ansprüche 1 bis 6 auszuführen.

**14.** Computerlesbares Speichermedium, auf welchem das Computerprogramm nach Anspruch 13 abgespeichert ist.

**Claims**

**1.** A method for monitoring a solenoid valve (22) comprising:

a movable member (26) which extends in the conduit (4) and for which a current position can be regulated in order to control a current flow rate of fluid that can flow in the conduit;
an electric motor (24) arranged to cause the movable member to move so as to give it its current position;

the monitoring method comprising regularly repeated monitoring stages and each comprising the steps of:

driving the electric motor to modify the current position of the movable member;

evaluating a monitoring value representative of an inrush current (Ia) of the electric motor during the driving step;

comparing the monitoring value with at least one first predetermined threshold (S1) and, if the monitoring value is greater than said first predetermined threshold, implementing at least one corrective action to avoid a blockage of the solenoid valve (22), **characterized in that** the at least one corrective action comprises a corrective action consisting in increasing a supply voltage of the electric motor (24) of the solenoid valve (22).

2. The monitoring method according to claim 1, wherein the at least one corrective action further comprises a corrective action consisting in increasing a frequency of implementation of the monitoring stages.

3. The monitoring method according to claims 1 and 2, wherein each monitoring stage comprises the step, if the monitoring value is greater than said first predetermined threshold, of comparing with a predetermined frequency threshold (Sf) the frequency of implementation of the monitoring stages, and the step of:

  if said frequency of implementation is lower than the predetermined frequency threshold, implementing the corrective action consisting in increasing the frequency of implementation of the monitoring stages, or

  if said frequency of implementation is higher than the predetermined frequency threshold, implementing the corrective action consisting in increasing the power supply voltage of the electric motor (24) of the solenoid valve (22) .

4. The monitoring method according to any one of the preceding claims, wherein each monitoring stage further comprises the steps, if the monitoring value is less than said first predetermined threshold, of comparing the monitoring value with a second predetermined threshold (S2) less than the first predetermined threshold and, if the monitoring value is less than said second predetermined threshold, of reducing a frequency of implementation of the monitoring stages.

5. The monitoring method according to any one of the preceding claims, further comprising the step of acquiring measurements of a current flow rate of the fluid in the conduit (4), the monitoring steps being implemented only when the current flow rate is zero.

6. The monitoring method according to any one of the preceding claims, wherein the monitoring value is equal to a ratio between the inrush current and a rated current of the electric motor (24) during the driving step.

7. A flow rate control system comprising a solenoid valve (22), a current sensor (29) arranged to measure an electric current supplied to an electric motor (24), and a processing circuit (5) in which the monitoring method as described above is implemented.

8. The flow rate control system according to claim 7, further comprising a power supply component (8) arranged to power the processing circuit (5) and the electric motor (24) of the solenoid valve, the current sensor being a shunt mounted in parallel with two outputs of the power supply component.

9. The flow rate control system according to any one of claims 7 or 8, wherein the solenoid valve is a ball valve.

10. A fluid meter comprising a flow rate measurement device (17) and a flow rate control system according to any one of claims 7 to 9.

11. The fluid meter according to claim 10, the flow rate measurement device (17) being an ultrasonic measurement device comprising two transducers (18a, 18b) arranged to emit and receive ultrasonic signals in the conduit, the ultrasonic measurement device being arranged to evaluate a current flow rate of the fluid from the time of flight of the ultrasonic signals between the transducers.

12. The fluid meter according to claim 10 or 11, the solenoid valve (22) being positioned along a length of the conduit between the two transducers.

13. A computer program comprising instructions which cause the processing circuit of the meter according to any one of claims 7 to 9 to execute the steps of the measurement method as claimed in any one of claims 1 to 6.

14. Storage media which can be read by a computer, on which the computer program according to claim 13 is stored.

Fig. 1

Fig. 2

Fig. 3

Fig. 4

Fig. 5

Fig. 6

**EP 4 269 850 B1**